# EUROPEAN PATENT APPLICATION

(11) **EP 4 579 821 A1**
(43) Date of publication of application: **02.07.2025**
(21) Application number: 22962977.9
(22) Date of filing: 24.10.2022
(51) Int. Cl.: H01M 4/66, H01M 4/64, H01M 10/0567

(54) **COMPOSITE CURRENT COLLECTOR, POSITIVE ELECTRODE SHEET, ELECTROCHEMICAL DEVICE, AND ELECTRIC APPARATUS**

(71) Applicant: Ningde Amperex Technology Limited, Ningde, Fujian 352100 (CN)
(72) Inventor: LIU, Xiaoqian, Ningde, Fujian 352100 (CN)
(74) Representative: Icosa
(86) International application number: PCT/CN2022/127127
(87) International publication number: WO 2024/086989

(57) **Abstract**

This application provides a composite current collector, a positive electrode sheet, an electrochemical device, and an electric apparatus. The composite current collector includes a metal substrate layer and a functional layer located on a surface of the metal substrate layer; where the functional layer is analyzed using an energy dispersive spectrometer, and based on a total number of atoms of the C element, the O element, and a metal element in the functional layer, an atomic percentage of the C element in the functional layer is x, an atomic percentage of the O element in the functional layer is y, and an atomic percentage of the metal element in the functional layer is z, satisfying: 5%≤x≤25%, 10%≤y≤30%, and 55%≤z≤85%. The functional layer with specific element contents on the surface of the metal substrate layer, a coverage of a coating on a surface of the composite current collector can be effectively improved while electrical performance is ensured, thereby improving the safety of the electrochemical device.

## Description

### TECHNICAL FIELD

This application relates to the field of batteries, and in particular, to a composite current collector, a positive electrode sheet, an electrochemical device, and an electric apparatus.

### BACKGROUND

With the rapid growth of portable electronic devices, electric tools, and electric vehicles, the demand for batteries is continuously increasing. The safety of batteries is also receiving increasing attention.

### SUMMARY

The inventors of this application noticed that metal foil, as a commonly used form of current collector, has low surface energy. When a coating (such as a safety layer or an active substance layer) is applied to a surface of the metal foil, problems such as uncoated spots, thinning of the coating, edge shrinkage, and low adhesive force are prone to occur. This results in low coverage of the coating on a surface of the current collector. During needling, short circuits are likely to occur at uncoated spots, thereby affecting the safety of a battery.

In view of the foregoing problems, this application aims to provide a composite current collector, a positive electrode sheet, an electrochemical device, and an electric apparatus that can effectively improve the coverage of the coating on the surface of the composite current collector while ensuring electrical performance, thereby improving the safety of the electrochemical device.

According to a first aspect, this application provides a composite current collector, including a metal substrate layer and a functional layer located on a surface of the metal substrate layer, where the functional layer is analyzed using an energy dispersive spectrometer, and based on a total number of atoms of the C element, the O element, and a metal element in the functional layer, an atomic percentage of the C element in the functional layer is x, an atomic percentage of the O element in the functional layer is y, and an atomic percentage of the metal element in the functional layer z, satisfying: 5%≤x≤25%, 10%≤y≤30%, and 55%≤z≤85%. The functional layer is provided on the surface of the metal substrate layer, and the functional layer containing specific contents of the C element, the O element, and the metal element, allowing the composite current collector to have both low resistivity and high surface energy. High surface energy can effectively improve a coverage of a coating on a surface of a current collector, thereby improving the safety of an electrochemical device. In addition, high surface energy also facilitates thin coating, where thin coatings and low resistivity can effectively improve the energy density and rate performance of the electrochemical device.

In some embodiments, the functional layer contains metal particles and metal oxide particles. The metal particles can enhance the conductivity of the functional layer, thereby allowing the composite current collector to have low resistivity. While the metal oxide particles have higher surface energy than the metal particles. In addition, the presence of the metal particles and the metal oxide particles creates an uneven surface of the functional layer, and gaps are present between the particles. This can facilitate the spreading of a coating slurry, thereby improving the coverage of the coating on the surface of the current collector.

In some embodiments, an average particle size of the metal particles is 3 nm-500 nm. In some embodiments, an average particle size of the metal oxide particles is 3 nm-100 nm. In some embodiments, the average particle size of the metal particles is 3 nm-80 nm. In some embodiments, the average particle size of the metal oxide particles is 3 nm-30 nm. The average particle sizes of the metal particles and the metal oxide particles are controlled within the forgoing ranges, which is conducive to achieving high uniformity of the functional layer and reducing differences in local surface energy, thereby facilitating the spreading of the coating slurry.

In some embodiments, the metal particles include at least one of Al, Cu, Ni, Ti, or Fe. In some embodiments, the metal oxide particles include at least one of aluminum oxide, copper oxide, nickel oxide, titanium dioxide, or iron oxide. The selection of specific types of the metal particles and the metal oxide particles allows the composite current collector to have high surface energy and low resistivity.

In some embodiments, a thickness of the functional layer is 5 nm-1000 nm. The thickness of the functional layer is within the foregoing range, the selection of the lower limit allows the functional layer to better cover the surface of the metal substrate layer, thereby facilitating the improvement of the coverage of the coating on the surface of the current collector. The selection of the upper limit can avoid the reduction of the energy density of the electrochemical device due to the large thickness of the functional layer. In some embodiments, the thickness of the functional layer is 5 nm-300 nm.

In some embodiments, the functional layer further includes a first binder. In some embodiments, based on a mass of the functional layer, a mass percentage of the first binder in the functional layer is 5%-30%. In some embodiments, the first binder includes at least one of olefin polymer, acrylic polymer, amide polymer, fluoroolefin polymer, carboxymethyl cellulose salt, or rubber. The functional layer contains the first binder. This is conducive to better spreading and adhesion of the functional layer slurry on the surface of the metal substrate layer, and allowing for higher stability of the functional layer on the surface of the metal substrate layer. In addition, this is conducive to improving the coverage of the coating, thereby improving the safety of the electrochemical device.

In some embodiments, a resistivity of the composite current collector is less than or equal to 60 Ω•nm. In this case, the composite current collector has a low resistivity, effectively improving the rate performance of the electrochemical device.

In some embodiments, a contact angle between the composite current collector and deionized water is θ, satisfying: θ≤50°. In this case, the contact angle between the composite current collector and the deionized water is small, indicating that the composite current collector has a high surface tension to water, and when an aqueous coating slurry is used for coating, it can be ensured that the coating has a high coverage on the surface of the current collector.

In some embodiments, the metal substrate layer is an aluminum foil. In some embodiments, based on a mass of the aluminum foil, a mass percentage of the Al element in the aluminum foil is w1, a mass percentage of the Si element is w2, a mass percentage of the Fe element is w3, a mass percentage of the Cu element is w4, and a mass percentage of the Ti element is w5, satisfying: 98.5%≤w1<100%, 0<w2≤0.4%, 0<w3≤0.6%, 0<w4≤0.4%, and 0<w5≤0.2%. In some embodiments, a tensile strength of the aluminum foil is 100 MPa-350 MPa. In some embodiments, an elongation at break of the aluminum foil is 0.5%-8%. The aluminum foil has the foregoing specific elemental compositions, tensile strength, or elongation at break, allowing the aluminum foil to have suitable electrical performance and mechanical performance, thereby better satisfying the performance requirements of the composite current collector. In some embodiments, 98.5%≤w1<100%, 0.05%≤w2≤0.3%, 0.1%≤w3≤0.5%, 0.1%≤w4≤0.3%, and 0.01%≤w5≤0.1%. In some embodiments, the tensile strength of the aluminum foil is 150 MPa-280 MPa. In some embodiments, the elongation at break of the aluminum foil is 1%-8%.

In some embodiments, a thickness of the aluminum foil is 4.5 µm-35 µm. The thickness of the aluminum foil is controlled within the foregoing range, the selection of the lower limit allows the aluminum foil to have suitable mechanical performance. In addition, the selection of the upper limit can avoid the loss of the energy density of the electrochemical device due to the large thickness of the aluminum foil. In some embodiments, the thickness of the aluminum foil is 8 µm-20 µm.

According to a second aspect, this application provides a positive electrode sheet, including the composite current collector according to the foregoing embodiments, and a coating located on the surface of the composite current collector, where the coverage of the coating on the composite current collector is greater than or equal to 90%. Due to the composite current collector according to the foregoing embodiments has high surface energy, the coating has high coverage on the surface of the metal substrate layer.

In some embodiments, the coating includes a safety layer and a positive electrode active substance layer, where the safety layer is located between the functional layer and positive electrode active substance layer. In this case, the setting of the safety layer can further improve the safety of the electrochemical device.

In some embodiments, the safety layer includes inorganic insulating particles, a conductive agent, and a second binder. In some embodiments, a thickness of the safety layer is 0.5 µm-20 µm. In some embodiments, a thickness of the active substance layer is 30 µm-200 µm. In some embodiments, the inorganic insulating particles include at least one of boehmite, aluminum oxide, titanium oxide, silicon oxide, magnesium oxide, hafnium oxide, tin oxide, cerium oxide, nickel oxide, zinc oxide, calcium oxide, zirconium oxide, yttrium oxide, aluminum hydroxide, magnesium hydroxide, calcium hydroxide, barium sulfate, calcium sulfate, calcium silicate, or silicon carbide. In some embodiments, the conductive agent includes at least one of a particulate conductive agent, a lamellar conductive agent, a reticular conductive agent, or a fibrous conductive agent. In some embodiments, the second binder includes at least one of olefin polymer, acrylic polymer, amide polymer, fluoroolefin polymer, carboxymethyl cellulose salt, or rubber. The thickness of the safety layer is controlled within the foregoing range, thereby better covering the surface of the composite current collector and better performing its safety protection function. The thickness of the active substance layer is controlled within the foregoing range, thereby better satisfying the electrochemical performance requirements of the electrode sheet. According to a third aspect, this application further provides an electrochemical device, including the positive electrode sheet according to the foregoing embodiments.

According to a fourth aspect, this application provides an electric apparatus, including the electrochemical device according to the foregoing embodiments.

### DETAILED DESCRIPTION

To make the objectives, technical solutions, and advantages of some embodiments of this application clearer, the following clearly and completely describes the technical solutions of these embodiments of this application.

It should be noted that, in the description of this application, unless otherwise specified, the scope of "value a-value b" includes the two end values "a" and "b". "Feature 1 and/or feature 2" refers to "feature 1" individually, "feature 2" individually, "feature 1" plus "feature 2", these three situations.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification and claims of this application are intended to cover non-exclusive inclusions.

In the descriptions of some embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated.

The following specifically describes the composite current collector, positive electrode sheet, electrochemical device, and electric apparatus according to some embodiments of this application.

According to a first aspect, some embodiments of this application provide a composite current collector including a metal substrate layer and a functional layer located on a surface of the metal substrate layer, where the functional layer is analyzed using an energy dispersive spectrometer, and based on a total number of atoms of the C element, the O element, and a metal element in the functional layer, an atomic percentage of the C element in the functional layer is x, an atomic percentage of the O element in the functional layer is y, and an atomic percentage of the metal element in the functional layer z, satisfying: 5%≤x≤25%, 10%≤y≤30%, and 55%≤z≤85%.

The metal substrate layer refers to a layered metal material, for example, a metal foil. The type of the metal material can be referred to a material type of a conventional current collector. For example, the metal material includes main components such as aluminum or copper and may further include small amounts of other metal elements, non-metal elements, and unavoidable impurity components.

The functional layer being located on the surface of the metal substrate layer means that the functional layer covers and adheres to the surface of the metal substrate layer. For example, the functional layer adheres to the surface of the metal substrate layer by means of coating and drying.

The functional layer refers to a film layer performing specific functions on the surface of the metal substrate layer. The specific functions are related to the composition of the functional layer. In this application, the functional layer at least has functions of allowing the composite current collector to have high surface energy and low resistivity.

The value of the atomic percentage x of the C element in the functional layer is, for example, but not limited to, any one point value of 5%, 10%, 15%, 20%, or 25%, or a range defined by any two of these values.

The value of the atomic percentage y of the O element in the functional layer is, for example, but not limited to, any one point value of 10%, 15%, 20%, 25%, or 30%, or a range defined by any two of these values.

The value of the atomic percentage z of the metal element in the functional layer is, for example, but not limited to, any one point value of 55%, 60%, 65%, 70%, 75%, 80%, or 85%, or a range defined by any two of these values.

An atomic percentage of a specific element refers to a percentage of the number of atoms of the specific element in the total number of atoms of the C element, the O element, and the metal element measured in the functional layer through analysis using the energy dispersive spectrometer.

In this application, the functional layer is analyzed using the energy dispersive spectrometer. As an example, under a scanning electron microscope (SEM), the atomic percentages of the C element, the O element, and the metal element in a cross-section of the functional layer perpendicular to the surface of the metal substrate layer are tested using the energy dispersive spectrometer (EDS).

The inventors of this application have found through research that the functional layer is provided on the surface of the metal substrate layer, and the functional layer is controlled to contain specific contents of the C element, the O element, and the metal element, allowing the composite current collector to have high surface energy and low resistivity. High surface energy can effectively improve a coverage of a coating on the surface of the current collector, thereby improving the safety of an electrochemical device. In addition, high surface energy also facilitates thin coating, where thin coatings and low resistivity can effectively improve the energy density and rate performance of the electrochemical device. In the functional layer, if the atomic percentage of the C element is too low, a bonding force between the functional layer and the surface of the metal substrate layer is weak, which easily leads to powder detachment during a manufacturing process, resulting in uneven surface energy of the functional layer, thereby reducing the coverage of the coating on the composite current collector. If the atomic percentage of the O element is too low and the atomic percentage of the C element is too high, the surface energy of the functional layer is less likely to be effectively improved, making the coverage of the coating be less likely to be effectively improved. On the contrary, if the atomic percentage of the O element is too high and the atomic percentage of the metal element is too low, both conditions deteriorate the electrical performance of the composite current collector and increase the resistivity of the composite current collector.

Regarding the functional layer, in some embodiments, the functional layer contains metal particles and metal oxide particles. The metal particles can enhance the conductivity of the functional layer, thereby allowing the composite current collector to have low resistivity. While the metal oxide particles have higher surface energy than the metal particles. In addition, the presence of the metal particles and the metal oxide particles creates an uneven surface of the functional layer, and gaps are present between the particles. This can facilitate the spreading of a coating slurry, thereby improving the coverage of the coating on the surface of the current collector.

Optionally, the metal particles include at least one of Al, Cu, Ni, Ti, or Fe. Optionally, the metal oxide particles include at least one of aluminum oxide, copper oxide, nickel oxide, titanium dioxide, or iron oxide. In the foregoing embodiments, the selection of specific types of the metal particles and the metal oxide particles allows the composite current collector to have high surface energy and low resistivity.

Optionally, an average particle size of the metal particles is 3 nm-500 nm; further, the average particle size of the metal particles is 3 nm-80 nm. As an example, the average particle size of the metal particles is, for example, but not limited to, any one point value of 3 nm, 10 nm, 15 nm, 20 nm, 30 nm, 40 nm, 50 nm, 60 nm, 70 nm, 80 nm, 100 nm, 200 nm, 300 nm, 400 nm, or 500 nm, or a range defined by any two of these values. Optionally, an average particle size of the metal oxide particles is 3 nm-100 nm; further, the average particle size of the metal oxide particles is 3 nm-30 nm. As an example, the average particle size of the metal oxide particles is, for example, but not limited to, any one point value of 3 nm, 5 nm, 8 nm, 10 nm, 15 nm, 20 nm, 25 nm, 30 nm, 40 nm, 50 nm, 60 nm, 70 nm, 80 nm, 90 nm, or 100 nm, or a range defined by any two of these values. The average particle sizes of the metal particles and the metal oxide particles are controlled within the foregoing ranges, which is conducive to achieving high uniformity of the functional layer and reducing differences in local surface energy, thereby facilitating the spreading of the coating slurry and improving the coverage of the coating on the surface of the current collector.

In this application, the average particle size of the metal particles and the average particle size of the metal oxide particles in the functional layer can be tested using methods known in the art. As an example, a transmission electron microscope (TEM) is used to capture micrographs of a sample, the longest diameters of 50 particles are randomly counted, and an average value thereof is taken as the average particle size.

Optionally, a thickness of the functional layer is 5 nm-1000 nm; further, the thickness of the functional layer is 5 nm-300 nm. As an example, the thickness of the functional layer is any one point value of 5 nm, 10 nm, 20 nm, 30 nm, 50 nm, 100 nm, 150 nm, 200 nm, 250 nm, 300 nm, 400 nm, 500 nm, 600 nm, 700 nm, 800 nm, 900 nm, or 1000 nm, or a range defined by any two of these values.

The thickness of the functional layer refers to a dimension of the functional layer in a direction perpendicular to the surface of the metal substrate layer.

In this application, the thickness of the functional layer can be tested using test methods known in the art. As an example, the thickness of the functional layer is tested by using SEM to test on a cross-section perpendicular to the surface of the metal substrate layer, for example, testing is performed at a plurality of points with an interval greater than or equal to 500 µm, where the number of the points is, for example, 15. Then, an average value thereof is taken as the thickness of the functional layer.

In the foregoing embodiments, the thickness of the functional layer is controlled within a specific range, the selection of the lower limit allows the functional layer to better cover the surface of the metal substrate layer, thereby facilitating the improvement of the coverage of the coating on the surface of the current collector. The selection of the upper limit can avoid the reduction of the energy density of the electrochemical device due to the large thickness of the functional layer.

Optionally, the functional layer further contains a first binder; further, based on a mass of the functional layer, a mass percentage of the first binder in the functional layer is 5%-30%.

The first binder refers to a material that can provide an adhesive force to the functional layer. Further, the first binder includes at least one of olefin polymer, acrylic polymer, amide polymer, fluoroolefin polymer, carboxymethyl cellulose salt, or rubber. As an example, the first binder includes at least one of polyvinylidene fluoride, a vinylidene fluoride-hexafluoropropylene copolymer, polyacrylonitrile, polyacrylate, polyacrylic acid, polyacrylate salt, polyvinylpyrrolidone, polyamide, polyvinyl ether, polytetrafluoroethylene, polyhexafluoropropylene, styrene-butadiene rubber, polyetherimide, or sodium carboxymethyl cellulose.

A mass percentage of the first binder in the functional layer is, for example, but not limited to, any one point value of 5%, 10%, 15%, 20%, 25%, or 30%, or a range defined by any two of these values.

In this application, the mass percentage of the first binder in the functional layer can be tested using test methods known in the art. As an example, the percentage of the first binder in the functional layer can be determined using thermogravimetric analysis.

In the foregoing embodiments, the functional layer contains the first binder. This is conducive to better spreading and adhesion of the functional layer slurry on the surface of the metal substrate layer, and allowing for higher stability of the functional layer on the surface of the metal substrate layer. In addition, this is conducive to improving the coverage of the coating, thereby improving the safety of the electrochemical device.

Regarding the metal substrate layer, in some embodiments, the metal substrate layer is an aluminum foil.

Optionally, based on a mass of the aluminum foil, a mass percentage of the Al element in the aluminum foil is w1, a mass percentage of the Si element is w2, a mass percentage of the Fe element is w3, a mass percentage of the Cu element is w4, and a mass percentage of the Ti element is w5, satisfying: 98.5%≤w1<100%, 0<w2≤0.4%, 0<w3≤0.6%, 0<w4≤0.4%, and 0<w5≤0.2%; further satisfying 98.5%≤w1<100%, 0.05%≤w2≤0.3%, 0.1%≤w3≤0.5%, 0.1%≤w4≤0.3%, and 0.01%≤w5≤0.1%.

In this application, the mass percentages of the elements in the metal substrate layer can be tested using test methods known in the art. As an example, the mass percentages of Al element and other elements in the aluminum foil are tested using inductively coupled plasma optical emission spectroscopy.

Optionally, a tensile strength of the aluminum foil is 100 MPa-350 MPa; further, the tensile strength of the aluminum foil is 150 MPa-280 MPa. As an example, the tensile strength of the aluminum foil is, for example, but not limited to, any one point value of 100 MPa, 125 MPa, 150 MPa, 175 MPa, 200MPa, 225 MPa, 250 MPa, 280 MPa, 300 MPa, 325 MPa, or 350 MPa, or a range defined by any two of these values.

Optionally, an elongation at break of the aluminum foil is 0.5%-8%; further, the elongation at break of the aluminum foil is 1%-8%. As an example, the elongation at break of the aluminum foil is, for example, but not limited to, any one point value of 0.5%, 1%, 2%, 3%, 4%, 5%, 6%, 7%, or 8%, or a range defined by any two of these values.

In this application, the tensile strength of the aluminum foil and the elongation at break of the aluminum foil can be tested using test methods known in the art. As an example, the aluminum foil is made into strips having a width of 15 mm and a length greater than or equal to 60 mm, the strips are stretched along a length direction at a speed of 5 mm/min using a high-speed tensile testing machine at a gauge length of 500 mm. The strength and elongation at break are taken as test results. Optionally, at least five strips are tested, and an average value of all test results is taken as the tensile strength of the aluminum foil and the elongation at break of the aluminum foil.

In the foregoing embodiments, the aluminum foil has a specific elemental composition, tensile strength, or elongation at break, allowing the aluminum foil to have suitable electrical performance and mechanical performance, thereby better satisfying the performance requirements of the composite current collector.

Optionally, the thickness of the aluminum foil is 4.5 µm-35 µm; further, the thickness of the aluminum foil is 8 µm-20 µm. As an example, the thickness of the aluminum foil is, for example, but not limited to, any one point value of 4.5 µm, 6 µm, 8 µm, 10 µm, 15 µm, 20 µm, 25 µm, 30 µm, or 35 µm, or a range defined by any two of these values.

The thickness of the aluminum foil refers to a dimension of the aluminum foil in a direction perpendicular to its surface. In this application, the thickness of the aluminum foil can be tested using test methods known in the art. As an example, the thickness of the aluminum foil can be tested with reference to the test method for the thickness of the functional layer.

In the foregoing embodiments, the thickness of the aluminum foil is controlled within a specific range. The selection of the lower limit can ensure that the aluminum foil has suitable mechanical performance. In addition, the selection of the upper limit can avoid the loss of the energy density of the electrochemical device due to the large thickness of the aluminum foil.

Regarding the composite current collector, based on some specific embodiments, for example, based on the specific selections in the foregoing embodiments, the surface energy and resistivity of the composite current collector can achieve the high-level standards described below.

In some embodiments, the resistivity of the composite current collector is less than or equal to 60 Ω•nm. The resistivity of the composite current collector is, for example, but not limited to, any one point value of 5 Ω•nm, 10 Ω•nm, 15 Ω•nm, 20 Ω•nm, 25 Ω•nm, 30 Ω•nm, 35 Ω•nm, 40 Ω•nm, 45 Ω•nm, 50 Ω•nm, or 60 Ω•nm, or a range defined by any two of these values.

In this application, the resistivity of the composite current collector can be tested using test methods known in the art. As an example, the resistivity of the composite current collector is tested using a HIOKI resistance tester, where testing conditions satisfy, for example, a pressure head area of 154.025 mm², a pressure of 0.4 t, and a pressure retention time of 5s. The selection of test positions satisfies, for example, the following conditions: testing is performed at a plurality of points with an interval of greater than or equal to 5 mm; the number of points is, for example, 15; and an average value is taken as a resistivity value.

In the foregoing embodiments, the composite current collector has a low resistivity, effectively improving the rate performance of the electrochemical device.

In some embodiments, a contact angle between the composite current collector and deionized water is θ, satisfying: θ≤50°. The contact angle θ between the composite current collector and the deionized water is, for example, but not limited to, any one point value of 20°, 25°, 30°, 35°, 40°, 45°, or 50°, or a range defined by any two of these values.

In this application, the contact angle θ between the composite current collector and the deionized water can be tested using test methods known in the art. As an example, a contact angle meter is used for testing.

In the foregoing embodiments, the contact angle between the composite current collector and the deionized water is small. That is to say, the composite current collector has a high surface tension to water, and when an aqueous coating slurry is used for coating, it can be ensured that the coating has a high coverage on the surface of the current collector.

According to a second aspect, some embodiments of this application provide a positive electrode sheet, including the composite current collector according to the foregoing embodiments, and a coating located on the surface of the composite current collector, where the coverage of the coating on the composite current collector is greater than or equal to 90%.

The coverage of the coating on the composite current collector is, for example, greater than or equal to 90%, greater than or equal to 91%, greater than or equal to 92%, greater than or equal to 93%, greater than or equal to 94%, greater than or equal to 95%, greater than or equal to 96%, greater than or equal to 97%, greater than or equal to 98%, or greater than or equal to 99%.

If the coating is a single layer, the coverage of the coating on the composite current collector refers to the percentage of a cover area of the coating on the surface of the composite current collector relative to a total surface area of the composite current collector. If the coating is multi-layered (for example, double-layered), the coverage of the coating on the composite current collector refers to the percentage of a cover length of a layer structure close to the composite current collector on the surface of the composite current collector relative to a surface length of the composite current collector.

In this application, the coverage of the coating on the functional layer can be tested using test methods known in the art. As an example, if the coating on the surface of the composite current collector is a single layer, an electrode sheet with a cut area of not less than 900 mm² is used as a detection region, and its area is recorded as S1. A CCD (charge-coupled device) microscope with a resolution of 0.02 µm is used to count an uncoated area in the detection region, and the uncoated area is recorded as S2. The coverage is then calculated as: 100%-(S2/S1). If the coating on the surface of the composite current collector is double-layered, n electrode sheets (where n≥5) are cut in a width direction or length direction using plasma. A cutting length of each electrode sheet is recorded as L1, L2, ..., Ln (each electrode sheet has a cutting length greater than or equal to 2 cm). Under the SEM, a total uncoated length of a layer close to the composite current collector for each electrode sheet is counted as P1, P2, ..., Pn. The coverage of the coating close to the composite current collector is then recorded as: 100%-[(P1/L1)+(P2/L2)...(Pn/Ln)]/n.

In the technical solutions of the embodiments of this application, due to the composite current collector has high surface energy, the coating has a high coverage on the surface of the composite current collector.

In some embodiments, the coating includes a safety layer and a positive electrode active substance layer, where the safety layer is located between the functional layer and the positive electrode active substance layer.

The safety layer is also known as a primer layer, which is a film layer that covers and connected to the surface of the composite current collector, and can be prepared by using slurry formulations known in the art.

The positive electrode active substance layer contains a positive electrode active substances such as lithium cobalt oxide, lithium iron phosphate, ternary materials, and lithium manganese oxide. According to design requirements, the positive electrode active substance layer may also contain a conductive agent, a binder, and the like.

In the foregoing embodiments, because the composite current collector has high surface energy, even a typically thin safety layer can have high coverage on the surface of the current collector.

In some embodiments, the safety layer includes inorganic insulating particles, a conductive agent, and a second binder.

Optionally, a thickness of the safety layer is 0.5 µm-20 µm. As an example, the thickness of the safety layer is, for example, but not limited to, any one point value of 0.5 µm, 1 µm, 2 µm, 3 µm, 5 µm, 10 µm, 15 µm, and 20 µm, or a range defined by any two of these values. The thickness of the safety layer refers to a dimension of the safety layer in a direction perpendicular to the surface of the composite current collector.

Optionally, a thickness of the active substance layer is 30 µm-200 µm. As an example, the thickness of the active substance layer is, for example, but not limited to, any one point value of 30 µm, 50 µm, 100 µm, 150 µm, and 200 µm, or a range defined by any two of these values. The thickness of the active substance layer refers to a dimension of the active substance layer in a direction perpendicular to the surface of the composite current collector.

In this application, the thicknesses of the safety layer and the active substance layer can be tested using test methods known in the art. As an example, the thicknesses of the safety layer and the active substance layer can be tested with reference to the test method for the thickness of the functional layer.

In the foregoing embodiments, the thickness of the safety layer is controlled within the foregoing range, thereby better covering the surface of the composite current collector and better performing its safety protection function. The thickness of the active substance layer is controlled within the foregoing range, thereby better satisfying the electrochemical performance requirements of the electrode sheet.

Optionally, the inorganic insulating particles include at least one of boehmite, aluminum oxide, titanium oxide, silicon oxide, magnesium oxide, hafnium oxide, tin oxide, cerium oxide, nickel oxide, zinc oxide, calcium oxide, zirconium oxide, yttrium oxide, aluminum hydroxide, magnesium hydroxide, calcium hydroxide, barium sulfate, calcium sulfate, calcium silicate, or silicon carbide.

Optionally, the conductive agent includes at least one of a particulate conductive agent, a lamellar conductive agent, a reticular conductive agent, or a fibrous conductive agent. As an example, the conductive agent includes at least one of conductive carbon black, acetylene black, carbon nanotubes, carbon fiber, Ketjen black, or graphene.

The second binder is a material that can provide an adhesive force to the safety layer, and a binder used for the safety layer known in the art may be used. Optionally, the second binder includes at least one of olefin polymer, acrylic polymer, amide polymer, fluoroolefin polymer, carboxymethyl cellulose salt, or rubber. As an example, the type of the second binder may be selected with reference to the first binder.

According to a third aspect, some embodiments of this application provide an electrochemical device, including an electrode assembly. The electrode assembly includes the positive electrode sheet according to foregoing embodiments, a separator, and a negative electrode sheet. The separator may be any separator known in the art.

Optionally, the negative electrode sheet includes a negative electrode current collector and a negative electrode active substance layer located on a surface of the negative electrode current collector. The negative electrode active substance layer contains a negative electrode active substance such as a carbon material and a silicon material. The carbon material is, for example, graphite, hard carbon, soft carbon, and the like. The silicon material is, for example, a silicon-oxygen material, a silicon-carbon material, a silicon alloy, and the like. According to design requirements, the negative electrode active substance layer may also contain a conductive agent, a binder, and the like.

According to a fourth aspect, some embodiments of this application provide an electric apparatus, including the electrochemical device according to the foregoing embodiments.

The electric apparatus may take various forms, such as mobile phones, portable devices, laptops, electric vehicles, electric cars, ships, spacecraft, electric toys, and electric tools.

The following further describes features and performance of this application in detail with reference to examples.

### I. Manufacture of composite current collector

### (1) Pretreatment of metal foil

A surface of the metal foil was cleaned using a degreasing agent or corona treatment to reduce the surface residual oil of the metal foil.

### (2) Formation of functional layer on surface of metal foil

A functional layer slurry was coated on the surface of the metal foil using gravure technology, and then dried to form a functional layer bonded to the surface of the metal foil.

In an example where the metal foil was an aluminum foil, the functional layer contained aluminum metal particles, aluminum oxide particles, and a first binder, and the atomic percentages of the C element, the O element, and the metal element in the functional layer were regulated by adjusting the amounts of the aluminum metal particles, the aluminum oxide particles, and the first binder. For example, the increase of the first binder would increase the atomic percentages of the C element and the O element, the increase of the aluminum metal particles would increase the atomic percentage of the metal element, and the increase of the aluminum oxide particles would increase the atomic percentages of the metal element and the O element.

Composite current collectors of other material types are referred to the foregoing method and will not be elaborated further.

### II. Test method

(1) Testing of the thicknesses of the functional layer, metal substrate layer, safety layer, and active substance layer, and testing of the atomic percentage of elements in the functional layer.
   1) In a direction perpendicular to a surface of the metal substrate layer, an electrode sheet was cut under plasma to obtain a cross-section of the electrode sheet; and
   2) the cross-section of the electrode sheet obtained in 1) was observed under SEM.

The thickness was tested at 15 points each, with an interval greater than or equal to 500 µm between adjacent points, and an average value of the 15 points was taken as the thickness of the respective functional layer, metal substrate layer, safety layer, and active substance layer.

Under the SEM, the atomic percentages of the C element, the O element, and the metal element in the functional layer were tested using an EDS.

(2) Testing the resistivity of the composite current collector and the aluminum foil.

The resistivity of the composite current collector or the aluminum foil was tested using a HIOKI resistance tester (a pressure head area of 154.025 mm², a pressure of 0.4 t, and a pressure retention time of 5s): 15 points were tested, with an interval greater than or equal to 5 mm between adjacent points, and an average value of the 15 test values was taken as the resistivity of the composite current collector or the aluminum foil.

(3) The mass percentages of the Al element, the Si element, the Fe element, the Cu element, the Ti element in the aluminum foil.

The mass percentages of the Al element, the Si element, the Fe element, the Cu element, and the Ti element in the aluminum foil were tested using inductively coupled plasma optical emission spectroscopy.

(4) The tensile strength and elongation at break of the aluminum foil.

The aluminum foil was made into strips having a width of 15 mm and a length greater than or equal to 60 mm, and the strips were stretched along a length direction at a speed of 5 mm/min using a high-speed tensile testing machine at a gauge length of 500 mm, the strength and elongation at break were taken as test results. At least five strips were tested, and an average value of all test results is taken as the tensile strength and the elongation at break of the aluminum foil.

(5) A coverage of a coating on the composite current collector.
1) If the coating is a single layer (safety layer or active substance layer), an electrode sheet with a single-layer coating and an area not less than 900 mm² was cut, and the area is recorded as S1; a CCD (charge-coupled device) microscope with a resolution of 0.02 µm was used to count an uncoated area in a detection region, and the uncoated area was recorded as S2. The coverage is then calculated as: 100%-(S2/S1).
2) If the coating is double-layered (safety layer and active substance layer), n electrode sheets (n≥5) were cut in a width direction or length direction with plasma, a cutting length of each electrode sheet is recorded as L1, L2, , Ln (each electrode sheet has a cutting length greater than or equal to 2 cm), under the SEM, a total uncoated length of a layer close to the composite current collector for each electrode sheet is tested and calculated as P1, P2, ..., Pn, then the coverage of the coating close to the aluminum foil on the composite current collector is: 100%-[(P1/L1)+(P2/L2)...(Pn/Ln)]/n.

(6) An average particle size of the metal particles and an average particle size of the metal oxide particles in the functional layer.

A transmission electron microscope (TEM) was used to capture micrographs of a sample of the functional layer, the longest diameter of 50 metal particles and metal oxide particles were randomly counted, and an average value thereof was taken as the average particle size.

(7) A contact angle θ between the composite current collector and deionized water.

A contact angle meter was used for testing. The specific test procedure was as follows: 1) The composite current collector was cut into strips having a length of 80-120 mm and a width of 7-15 mm; 2) the composite current collector from 1) was smoothly attached onto a glass slide without touching/polluting a surface to be tested; 3) the contact angle meter was used to drop deionized water onto the surface to be tested from 2), and a contact angle of deionized water with the test surface was obtained, recorded as θ.

### III. Performance test

(1) According to the different compositions of the functional layer slurry, the atomic percentages of elements in the functional layer formed on a surface of the aluminum foil were tested. The composition of the functional layer slurry and the corresponding atomic percentages of elements in the functional layer were shown in Table 1, where mass percentage of alloy elements in the aluminum foil was Al-99.47%, Si-0.1%, Fe-0.3%, Cu-0.1%, and Ti-0.03%; a thickness of the aluminum foil was 9 µm, the tensile strength was 260 MPa, and the elongation at break was 1.9%.

**Table 1**

| Item | Atomic percentage of elements in functional layer (%) | | | | | | | Compositions of functional layer slurry | | | | | | | | |
|---|---|---|---|---|---|---|---|---|---|---|---|---|---|---|---|---|
| | | | | | | | | Metal particles | | Metal oxide particles | | First binder | | Average particle size of metal particles (nm) | Average particle size of metal oxide particles (nm) | Thicknes s of functiona 1 layer (nm) |
| | C | O | Al | C u | Ni | Ti | Fe | Typ e | Mass percentage (%) | Type | Mass percenta ge (%) | Type | Mass percentage (%) | | | |
| Example 1 | 5 | 10 | 85 | / | / | / | / | Al | 86 | Al₂O₃ | 9 | Polyacrylic acid | 5 | 15 | 8 | 20 |
| Example 2 | 5 | 20 | 75 | / | / | / | / | Al | 72 | Al₂O₃ | 23 | Polyacrylic acid | 5 | 15 | 8 | 20 |
| Example 3 | 10 | 20 | 70 | / | / | / | / | Al | 70 | Al₂O₃ | 20 | Polyacrylic acid | 10 | 15 | 8 | 20 |
| Example 4 | 15 | 20 | 65 | / | / | / | / | Al | 69 | Al₂O₃ | 15 | Polyacrylic acid | 16 | 15 | 8 | 20 |
| Example 5 | 20 | 20 | 60 | / | / | / | / | Al | 68 | Al₂O₃ | 10 | Polyacrylic acid | 22 | 15 | 8 | 20 |
| Example 6 | 25 | 20 | 55 | / | / | / | / | Al | 67 | Al₂O₃ | 5 | Polyacrylic acid | 28 | 15 | 8 | 20 |
| Example 7 | 10 | 30 | 60 | / | / | / | / | Al | 54 | Al₂O₃ | 36 | Polyacrylic acid | 10 | 15 | 8 | 20 |
| Example 8 | 10 | 20 | 70 | / | / | / | / | Al | 70 | Al₂O₃ | 20 | Polyacrylic acid | 10 | 3 | 3 | 5 |
| Example 9 | 10 | 20 | 70 | / | / | / | / | Al | 70 | Al₂O₃ | 20 | Polyacrylic acid | 10 | 5 | 3 | 10 |
| Example 10 | 10 | 20 | 70 | / | / | / | / | Al | 70 | Al₂O₃ | 20 | Polyacrylic acid | 10 | 15 | 8 | 50 |
| Example 11 | 10 | 20 | 70 | / | / | / | / | Al | 70 | Al₂O₃ | 20 | Polyacrylic acid | 10 | 50 | 20 | 100 |
| Example 12 | 10 | 20 | 70 | / | / | / | / | Al | 70 | Al₂O₃ | 20 | Polyacrylic acid | 10 | 50 | 20 | 200 |
| Example 13 | 10 | 20 | 70 | / | / | / | / | Al | 70 | Al₂O₃ | 20 | Polyacrylic acid | 10 | 80 | 30 | 300 |
| Example 14 | 10 | 20 | 70 | / | / | / | / | Al | 70 | Al₂O₃ | 20 | Polyacrylic acid | 10 | 500 | 100 | 600 |
| Example 15 | 5 | 20 | 75 | / | / | / | / | Al | 72 | Al₂O₃ | 23 | Polyacrylic acid | 5 | 15 | 8 | 20 |
| Example 16 | 5 | 20 | 75 | / | / | / | / | Al | 72 | Al₂O₃ | 23 | Polyacrylic acid | 5 | 15 | 8 | 20 |
| Example 17 | 5 | 20 | 75 | / | / | / | / | Al | 72 | Al₂O₃ | 23 | Polyacrylic acid | 5 | 15 | 8 | 20 |
| Example 18 | 5 | 20 | 75 | / | / | / | / | Al | 72 | Al₂O₃ | 23 | Polyacrylic acid | 5 | 15 | 8 | 20 |
| Example 19 | 5 | 20 | 75 | / | / | / | / | Al | 72 | Al₂O₃ | 23 | Polyacrylic acid | 5 | 15 | 8 | 20 |
| Example 20 | 10 | 15 | / | 75 | / | / | / | Cu | 82 | CuO | 13 | Polyacrylic acid | 5 | 3 | 3 | 50 |
| Example 21 | 10 | 15 | / | / | 75 | / | / | Ni | 80 | NiO | 15 | Polyacrylic acid | 5 | 3 | 3 | 50 |
| Example 22 | 10 | 25 | / | / | / | 65 | / | Ti | 76 | TiO₂ | 19 | Polyacrylic acid | 5 | 3 | 3 | 50 |
| Example 23 | 10 | 20 | / | / | / | / | 70 | Fe | 78 | Fe₂O₃ | 17 | Polyacrylic acid | 5 | 3 | 3 | 50 |
| Example 24 | 10 | 20 | 70 | / | / | / | / | Al | 70 | Al₂O₃ | 22 | Polyvinylidene fluoride | 8 | 3 | 3 | 50 |
| Example 25 | 10 | 20 | 70 | / | / | / | / | Al | 73 | Al₂O₃ | 24 | Sodium carboxymethyl cellulose | 3 | 3 | 3 | 50 |
| Example 26 | 10 | 20 | 70 | / | / | / | / | Al | 68 | Al₂O₃ | 26 | Nitrile rubber | 6 | 3 | 3 | 50 |
| | | | | | | | | | | | | | | | | |

| Comparativ e example 1 | No functional layer | | | | | | | | | | | | | | | |
|---|---|---|---|---|---|---|---|---|---|---|---|---|---|---|---|---|
| Comparativ e example 2 | 3 | 25 | 72 | / | / | / | / | Al | 64 | Al₂O₃ | 33 | Polyacrylic acid | 3 | 50 | 20 | 100 |
| Comparativ e example 3 | 25 | 30 | 45 | / | / | / | / | Al | 48 | Al₂O₃ | 22 | Polyacrylic acid | 30 | 50 | 20 | 100 |
| Comparativ e example 4 | 10 | 35 | 55 | / | / | / | / | Al | 48 | Al₂O₃ | 44 | Polyacrylic acid | 11 | 50 | 20 | 100 |

(2) The resistivity and surface energy (expressed by the contact angle θ with deionized water) of different composite current collectors were tested, a coating was applied on the surface of the functional layer, a coverage of the coating on the composite current collector was tested, with results shown in Table 2.

The composition of the safety layer, in mass percentage, included: 90.4% boehmite, 1.5% SP, 8% (45% acrylonitrile+45% lithium acrylate+10% acrylamide) copolymer, and 0.1% polyether silicone. The composition of the active substance layer, in mass percentage, included: 97.3% lithium cobalt oxide (LCO), 0.6% SP, 0.5% CNT, and 1.6% PVDF.

**Table 2**

| Item | Resistivity of composite current collector (/Ω•nm) | θ (°) | Coating | | |
|---|---|---|---|---|---|
| | | | Type | Thickness (µm) | Coverage (%) |
| Example 1 | 31 | 45 | Safety layer | 3 | 95 |
| Example 2 | 32 | 30 | Safety layer | 3 | 99 |
| Example 3 | 33 | 30 | Safety layer | 3 | 99 |
| Example 4 | 35 | 30 | Safety layer | 3 | 99 |
| Example 5 | 37 | 30 | Safety layer | 3 | 99 |
| Example 6 | 42 | 30 | Safety layer | 3 | 99 |
| Example 7 | 36 | 30 | Safety layer | 3 | 99 |
| Example 8 | 30 | 48 | Safety layer | 3 | 92 |
| Example 9 | 31 | 45 | Safety layer | 3 | 94 |
| Example 10 | 35 | 30 | Safety layer | 3 | 99 |
| Example 11 | 40 | 30 | Safety layer | 3 | 99 |
| Example 12 | 43 | 30 | Safety layer | 3 | 99 |
| Example 13 | 48 | 30 | Safety layer | 3 | 99 |
| Example 14 | 60 | 50 | Safety layer | 3 | 90 |
| Example 15 | 32 | 30 | Safety layer | 0.5 | 95 |
| Example 16 | 32 | 30 | Safety layer | 10 | 100 |
| Example 17 | 32 | 30 | Active substance layer | 50 | 100 |
| Example 18 | 32 | 30 | Active substance layer | 100 | 100 |
| Example 19 | 32 | 30 | Active substance layer | 200 | 100 |
| Example 20 | 35 | 45 | Safety layer | 3 | 95 |
| Example 21 | 35 | 42 | Safety layer | 3 | 96 |
| Example 22 | 35 | 30 | Safety layer | 3 | 99 |
| Example 23 | 35 | 40 | Safety layer | 3 | 97 |
| Example 24 | 35 | 30 | Safety layer | 3 | 99 |
| Example 25 | 35 | 30 | Safety layer | 3 | 99 |
| Example 26 | 35 | 30 | Safety layer | 3 | 99 |
| Comparative example 1 | 30 | 70 | Safety layer | 3 | 80 |
| Comparative example 2 | 32 | 55 | Safety layer | 3 | 85 |
| Comparative example 3 | 90 | 40 | Safety layer | 3 | 98 |
| Comparative example 4 | 80 | 40 | Safety layer | 3 | 98 |

(3) The performance of the obtained aluminum foil was tested according to different elemental compositions and thicknesses, with results shown in Table 3.

The composition of the functional layer was the same as in Example 3 of Table 1, and the thickness of the functional layer was 20 nm.

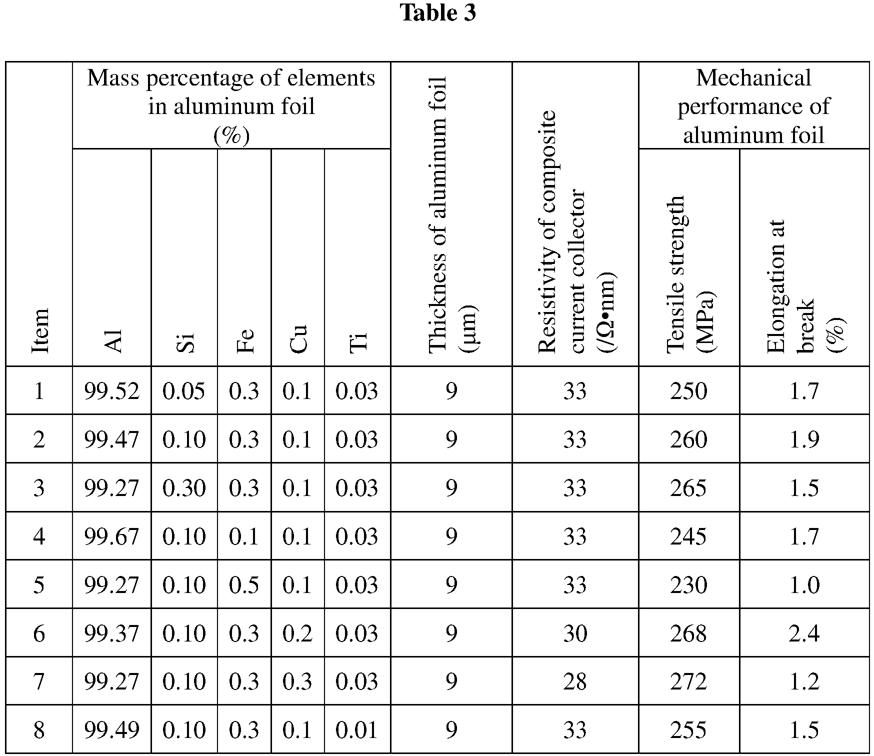

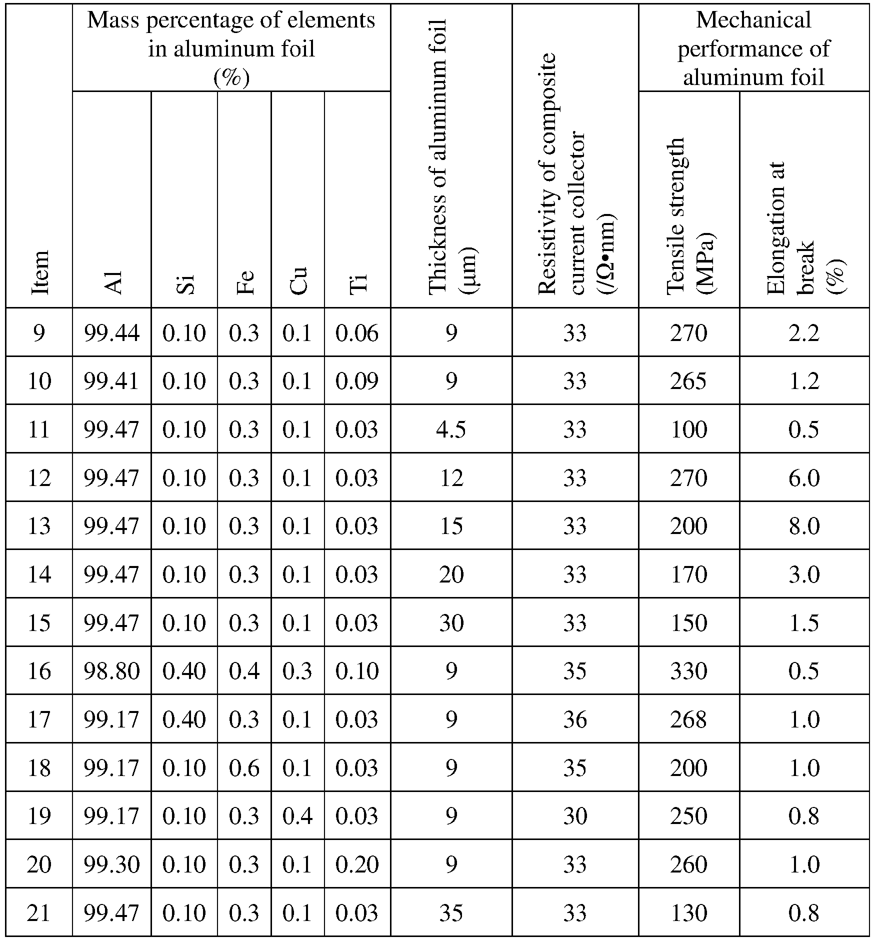

It can be learned from Table 1 and Table 2 that:
For the composite current collector provided by some embodiments of this application, the functional layer is provided on the surface of the aluminum foil and the functional layer is controlled to contain specific contents of the C element, the O element, and the metal element, allowing the composite current collector to have both low resistivity and high surface energy. High surface energy can effectively improve the coverage of the coating on the surface of the current collector, with the coverage of the coating reaching over 90%. In Comparative Example 1, without the functional layer, the current collector has low surface energy and low coverage of the coating. In Comparative Example 2, the atomic percentage of the C element in the functional layer is low, resulting in low surface energy for the composite current collector and low coverage of the coating. The possible reason is that a bonding force between the functional layer and the surface of the aluminum foil is weak, which easily leads to powder detachment during a manufacturing process, resulting in uneven surface energy of the functional layer, thereby reducing the coverage of the coating on the composite current collector. In Comparative Example 3, the atomic percentage of a metal element in the functional layer is low, resulting in high resistivity of the composite current collector. In Comparative Example 4, the atomic percentage of the O element in the functional layer is high, resulting in high resistivity of the composite current collector.

From the comparison of some embodiments, it can be further learned that when the contact angle θ between the composite current collector and deionized water is less than or equal to 45°, a surface tension of the composite current collector to water can be further increased, facilitating the spreading of a coating slurry when an aqueous coating slurry is used for coating, thereby further improving the coverage of the coating on the surface of the composite current collector.

From the comparison of Examples 8-13 with Example 14, it can be further learned that the average particle size of the metal particles is within a range of 3 nm-80 nm and the average particle size of the metal oxide particles is within a range of 3 nm-30 nm, thereby further improving the coverage of the coating on the composite current collector. The possible reason is that the average particle sizes of the metal particles and the metal oxide particles are controlled within the forgoing ranges, which is conducive to achieving high uniformity in the functional layer and reducing differences in local surface energy, thereby facilitating the spreading of the coating slurry.

It can be learned from Table 3 that the contents of the Al element, the Si element, the Fe element, the Cu element, and the Ti element in the aluminum foil satisfy: 98.5%≤w1<100%, 0.05%≤w2≤0.3%, 0.1%≤w3≤0.5%, 0.1%≤w4≤0.3%, and 0.01%≤w5≤0.1%, allowing the tensile strength of the aluminum foil to be within a range of 150 MPa-280 MPa and the elongation at break to be within a range of 1%-8%, thereby allowing the composite current collector to have excellent mechanical performance.

## Claims

1. A composite current collector, wherein the composite current collector comprises:
a metal substrate layer and a functional layer located on a surface of the metal substrate layer;
wherein the functional layer is analyzed using an energy dispersive spectrometer, and based on a total number of atoms of the C element, the O element, and a metal element in the functional layer, an atomic percentage of the C element in the functional layer is x, an atomic percentage of the O element in the functional layer is y, and an atomic percentage of the metal element in the functional layer z, satisfying: 5%≤x≤25%, 10%≤y≤30%, and 55%≤z≤85%.

2. The composite current collector according to claim 1, wherein the functional layer contains metal particles and metal oxide particles, and the functional layer satisfies at least one of the following conditions (a1)-(a6):
(a1) an average particle size of the metal particles is 3 nm-500 nm;
(a2) an average particle size of the metal oxide particles is 3 nm-100 nm;
(a3) the metal particles comprise at least one of Al, Cu, Ni, Ti, or Fe;
(a4) the metal oxide particles comprise at least one of aluminum oxide, copper oxide, nickel oxide, titanium dioxide, or iron oxide;
(a5) a thickness of the functional layer is 5 nm-1000 nm; or
(a6) the functional layer further contains a first binder.

3. The composite current collector according to claim 2, wherein the functional layer satisfies at least one of the following conditions (b1)-(b5):
(b1) the average particle size of the metal particles is 3 nm-80 nm;
(b2) the average particle size of the metal oxide particles is 3 nm-30 nm;
(b3) the thickness of the functional layer is 5 nm-300 nm;
(b4) based on a mass of the functional layer, a mass percentage of the first binder in the functional layer is 5%-30%; or
(b5) the first binder comprises at least one of olefin polymer, acrylic polymer, amide polymer, fluoroolefin polymer, carboxymethyl cellulose salt, or rubber.

4. The composite current collector according to claim 1, wherein a resistivity of the composite current collector is less than or equal to 60 Ω•nm,

5. The composite current collector according to claim 1, wherein a contact angle between the composite current collector and deionized water is θ, satisfying: θ≤50°.

6. The composite current collector according to claim 1, wherein the metal substrate layer is an aluminum foil, and the aluminum foil satisfies at least one of the following conditions (c1)-(c4):
(c1) based on a mass of the aluminum foil, a mass percentage of the Al element in the aluminum foil is w1, a mass percentage of the Si element is w2, a mass percentage of the Fe element is w3, a mass percentage of the Cu element is w4, and a mass percentage of the Ti element is w5, satisfying: 98.5%≤w1<100%, 0<w2≤0.4%, 0<w3≤0.6%, 0<w4≤0.4%, and 0<w5≤0.2%;
(c2) a tensile strength of the aluminum foil is 100 MPa-350 MPa;
(c3) an elongation at break of the aluminum foil is 0.5%-8%; or
(c4) a thickness of the aluminum foil is 4.5 µm-35 µm.

7. The composite current collector according to claim 6, wherein the aluminum foil satisfies at least one of the following conditions (d1)-(d4):
(d1) 98.5%≤w1<100%, 0.05%≤w2≤0.3%, 0.1%≤w3≤0.5%, 0.1%≤w4≤0.3%, and 0.01%≤w5≤0.1%;
(d2) the tensile strength of the aluminum foil is 150 MPa-280 MPa;
(d3) the elongation at break of the aluminum foil is 1%-8%; or
(d4) the thickness of the aluminum foil is 8 µm-20 µm.

8. A positive electrode sheet, wherein the positive electrode sheet comprises the composite current collector according to any one of claims 1 to 7, and a coating located on a surface of the composite current collector, wherein a coverage of the coating on the composite current collector is greater than or equal to 90%.

9. The positive electrode sheet according to claim 8, wherein the coating comprises a safety layer and a positive electrode active substance layer, and the safety layer is located between the functional layer and the positive electrode active substance layer.

10. The positive electrode sheet according to claim 9, wherein the safety layer comprises inorganic insulating particles, a conductive agent, and a second binder; and the coating satisfies at least one of the following conditions (e1)-(e5):
(e1) a thickness of the safety layer is 0.5 µm-20 µm;
(e2) a thickness of the active substance layer is 30 µm-200 um;
(e3) the inorganic insulating particles comprise at least one of boehmite, aluminum oxide, titanium oxide, silicon oxide, magnesium oxide, hafnium oxide, tin oxide, cerium oxide, nickel oxide, zinc oxide, calcium oxide, zirconium oxide, yttrium oxide, aluminum hydroxide, magnesium hydroxide, calcium hydroxide, barium sulfate, calcium sulfate, calcium silicate, or silicon carbide;
(e4) the conductive agent comprises at least one of a particulate conductive agent, a lamellar conductive agent, a reticular conductive agent, or a fibrous conductive agent; or
(e5) the second binder comprises at least one of olefin polymer, acrylic polymer, amide polymer, fluoroolefin polymer, carboxymethyl cellulose salt, or rubber.

11. An electrochemical device, wherein the electrochemical device comprises the positive electrode sheet according to any one of claims 8 to 10.

12. An electric apparatus, wherein the electric apparatus comprises the electrochemical device according to claim 11.
